# EUROPEAN PATENT SPECIFICATION

(11) **EP 0 841 121 B1**
(45) Date of publication and mention of the grant of the patent: **30.05.2001**
(21) Application number: 97119279.4
(22) Date of filing: 04.11.1997
(51) Int. Cl.: B23Q 5/20, B23Q 39/02

(54) **Rotating-tool fixing structure in a tool turret**
Befestigungsstruktur eines drehenden Werkzeuges bei einem Werkzeugrevolver
Structure de fixation d'un outil rotatif sur une tourelle porte-outils

(30) Priority: 08.11.1996 JP 31270896
(43) Date of publication of application: 13.05.1998
(73) Proprietor: Murata Kikai Kabushiki Kaisha, Minami-ku, Kyoto-shi, Kyoto 601 (JP)
(72) Inventor: Matsuno, Osamu, Kani-shi, Gifu (JP)
(74) Representative: Liedl, Christine, Dipl.-Chem.

(56) References cited:
- DE-A- 4 125 003
- US-A- 4 872 244
- US-A- 5 455 993
- PATENT ABSTRACTS OF JAPAN vol. 009, no. 162 (M-394), 6 July 1985 & JP 60 034239 A (MIYANO TEKKOSHO:KK), 21 February 1985,

## Description

The present invention relates to a rotating-tool fixing structure according to the preamble of claim 1.

US-A-5 455 993 describes a rotating-tool fixing structure, which comprises two almost circular ribs attached to the turret and engaging in grooves of coupling elements of those tools which are not located in the working position, while the ribs form a gap at each working station for driving the tools.

During the installation and removal of a rotating tool the guide member is to be prevented from being twisted to enable the rotating tool to be tightened and fixed reliably. The invention aims to achieve an improvement in these characteristics by modifying the known fixing structure.

According to the invention, this problem is solved by the features of the characterising portion of claim 1.

### Brief Description of the Drawing

Figure 1 is a plan view showing an approximate configuration of a machine tool including a tool installation and removal mechanism according to one embodiment of this invention;
Figure 2 is a cross-sectional view taken along line II-II in Figure 1.
Figure 3 is a horizontal cross-sectional view showing the integral part of a tool-driving mechanism in the machine tool;
Figure 4A is an exploded front view of the tool-driving mechanism, and Figure 4B is a right cross-sectional view of this mechanism;
Figure 5A is a perspective view showing an approximate configuration of the tool-driving mechanism, and Figure 5B is a perspective view showing the integral part of this mechanism;
Figure 6 is a horizontal cross-sectional view of the tool installation and removal mechanism; and
Figure 7 is a perspective view of a fixing and tightening means in the tool installation and removal mechanism.

### Detailed Description of the Preferred Embodiments

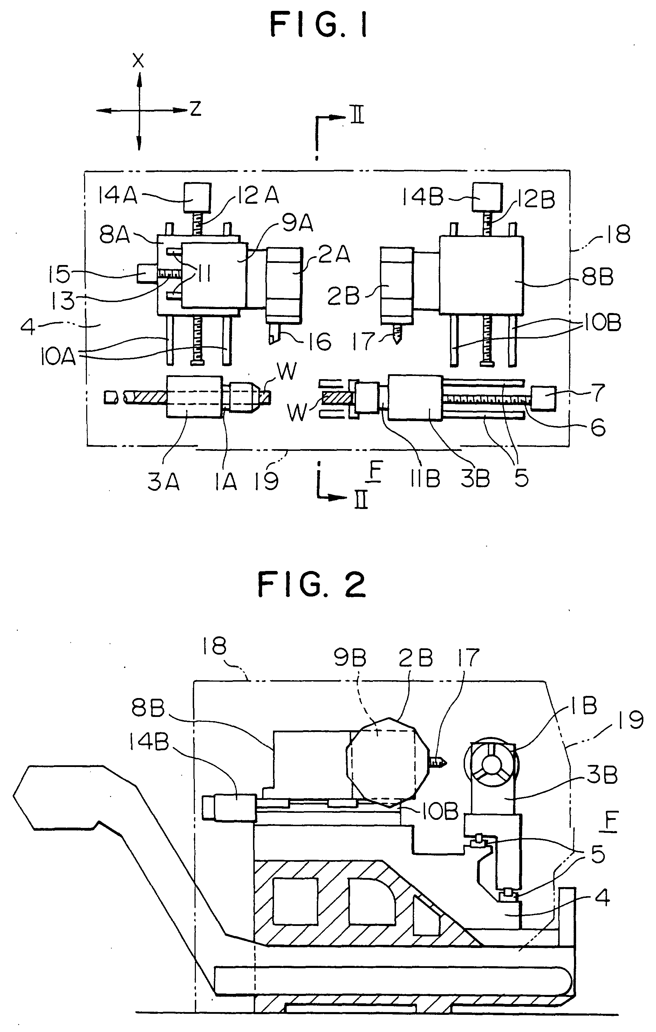

One embodiment of this invention is described with reference to Figures 1 to 7. Figure 1 is a plan view showing an approximate configuration of a machine tool including a rotating-tool fixing structure according to this embodiment. Figure 2 is a cross-sectional view taken along line II-II in Figure 1.

This machine tool is a two-opposed-spindle lathe comprising first and second main spindles 1A and 1B disposed opposite each other so as to align their axes, and first and second turrets 2A and 2B disposed relative to the main shafts 1A and 1B. The first main shaft 1A is supported by a head stock 3A, which is fixed to and installed on a bed 4. The second main spindle 1B is supported by the head stock 3B, which is installed on a rail 5 on the bed 4 so as to move in the axial direction of the main spindle 1A (the direction of the Z-axis). The head stock 3B is moved in the direction of the Z-axis by a Z-axis servo motor 7 via a feed screw 6.

A slide 8A for the first turret 2A has a turret slide 9A and is installed on a rail 10A on the bed 4 so as to move in the direction (the direction of the X-axis) orthogonal to the direction of the axis of the main spindle 1A (the direction of the Z-axis). The turret slide 9A is installed on a rail 11 on the slide 8A so as to move in the direction of the Z-axis, and the turret 2A is installed on the turret slide 9A so as to be rotated for indexation. The slide 8A and the turret slide 9A are fed in the directions of the X- and Z-axes by an X-axis servo motor 14A and a Z-axis servo motor 15 via feed screws 12A and 13, respectively. The turrets 2A and 2B are shaped like drums with a polygonal front shape, and can accommodate various tools 16 and 17 in their tool stations, each of which consists of a circumferential surface.

The second turret 2B has almost the same configuration as the first turret 2A. The second turret 2B, however, moves only in the cutting direction and is fed in the axial direction for the machining of a workpiece W through the relative movement of the head stock 3B. A slide 8B is installed on the rail 10B on the bed 4 so as to move in the direction of the X-axis, and the turret 2B is installed on the turret slide 9B (Figure 2) so as to be rotated for indexation. The slide 8B is fed in the direction of the X-axis by an X-axis servo motor 14B via a feed screw 12B.

The entire two-opposed-spindle lathe is covered with a cover 18, the front side F of which can be opened and closed via a door 19. Thus, the installation and removal of the workpiece W on and from the main spindles 1A and 1B and the installation and removal of the tools 16 and 17 on and from the turrets 2A and 2B, respectively, are carried out from the front side F of the two-opposed-spindle lathe.

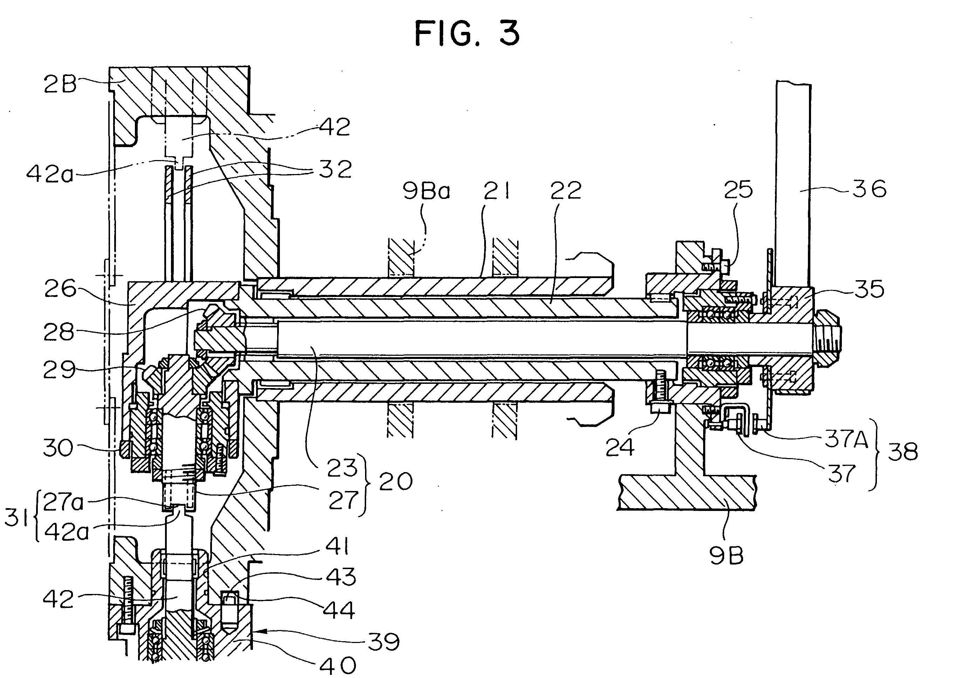

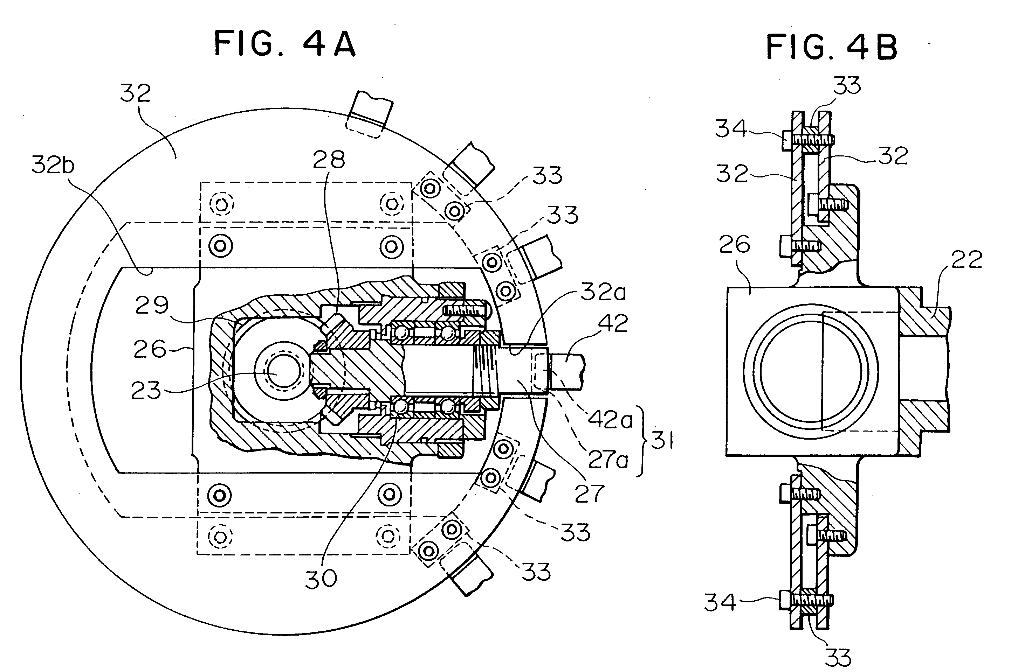

Figure 3 is a horizontal cross-sectional view showing a tool-driving mechanism 20 in the second turret 2B of the two-opposed-spindle lathe. Figures 4A and 4B show its front and right cross-sectional views, respectively. The various tools, such as a cutting tool, which are loaded in the tool stations that each consist of a circumferential surface of the turret 2B, include milling tools and rotating tools 17 such as drills.

The turret 2B is fixed to the tip of a hollow turret shaft 21 and rotatably supported by a turret support section 9Ba of the turret slide 9B via the turret shaft 21. A hollow fixing shaft 22 penetrates through the turret shaft 21, and a tool-driving shaft 23 of the tool-driving mechanism 20 is rotatably inserted into the shaft 22. The fixing shaft 22 is fixed to the turret slide 9B using bolts 24 and 25 at its rear end, and has fixed at its tip a gear box 26 that is a non-rotating member in the turret 2B. The tool-driving mechanism 20 transmits rotations from the tool-driving shaft 23 via bevel gears 28 and 29 to a transmission output shaft 27 installed in a position at a specified angle (facing the front F of the machine) within the turret 2B so as to extend in the radial direction. The transmission output shaft 27 is rotatably supported in a gear box 26 by a bearing 30.

A recessed portion 27a like a linear groove is formed in the end surface of the transmission output shaft 27, and a linear protruding portion 42a that engages with the recessed portion 27a is formed at the input end of a transmission input shaft 42 of a tool holder 39 described below. The recessed portion 27a and the protruding portion 42a constitute a clutch 31. The positions of the transmission output shaft 27 and the transmission input shaft 42 are fixed relative to the radial direction of the turret 2B, but the transmission output shaft 27 and the transmission input shaft 42 can be engaged and disengaged in the rotating direction of the turret 2B due to their linear shapes.

Two parallel disc-like guide plates 32 that sandwich the protruding portion 42a of the transmission input shaft 42 are installed around the axis of the turret 2B and fixed to the fixed gear box 26 so as to be perpendicular to the axis of the turret. In the middle of the guide plate 32 is an opening 32b in which the gear box 26 can be accommodated and which has a notch 32a (Figure 4A) through which the transmission output shaft 27 of the tool-driving mechanism 20 penetrates, formed in a circumferential position that faces the front F of the machine. Reinforcing members 33 sandwiched by the guide plates 32 are fixed by bolts 34 in the circumferential part of the guide plates 32 in which the notch 32a is formed and which faces the front F of the machine, thereby reinforcing the guide plates 32. The reinforcing member 33 is provided in a plurality of positions in both rotating directions of the turret relative to a machining position. When one tool station of the turret 2B is in a machining position, these positions corresponding to the other tool stations.

As shown in Figure 3, a pulley 35 is provided at the rear end of the tool-driving shaft 23, and a timing belt 36 is passed between the pulley 35 and a pulley for the output shaft of a motor (not shown in the drawing). This configuration allows the rotational output of the motor to be transmitted as a driving source from the tool-driving shaft 23 to the transmission input shaft 42 of the tool holder 39 via the transmission output shaft 27. In addition, a marker 37A is provided for the pulley 35 at the rear end of the tool-driving shaft 23, while a sensor 37 that detects the marker 37A is provided on the turret slide 9B side opposite the marker. The marker 37A and the sensor 37 constitute an encoder 38. The output from the encoder 38 is input to a stop-angle regulating device (not shown in the drawing) that is composed of an NC device or an exclusive electric circuit and which controls the motor so that the rotational phase of the transmission output shaft 27 of the tool-driving mechanism 20 is at a specified angle. This specified angle is such that the linear recessed portion 27a is parallel to a plane perpendicular to the axis of the turret. The stop-angle regulating device and the guide plates 32 in the turret 2B provide control such that the direction of the recessed portion 27a aligns with the direction of the protruding portion 42a.

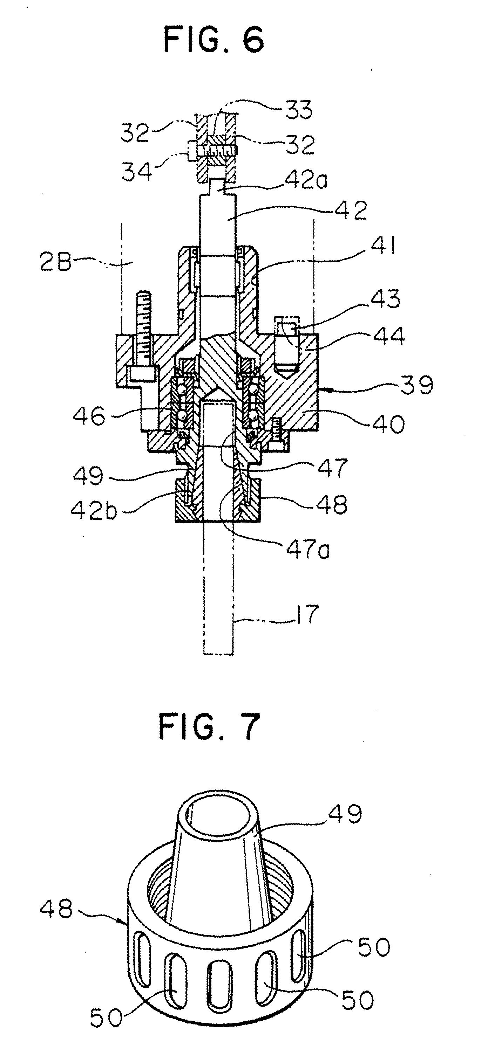

As shown in Figure 6, the tool holder 39 that allows the rotating tool 17 to be loaded into the tool station consisting of a circumferential surface of the turret 2B has a holder body 40 directly fixed to it, and the transmission input shaft 42 that penetrates through the holder body 40 and extends in the radial direction of the turret 2B from a rotation driving hole 41 of the turret 2B to the inside thereof. The holder body 40 engages a positioning pin 43 protruding from the end surface contacting the tool station with a pin engagement hole 44 formed in the surface of the tool station, and is fixed to the tool station by a plurality of bolts 45. The transmission input shaft 42 is a rotation transmission means that engages with the transmission output shaft 27 of the tool-driving mechanism 20 in an index position to transmit the rotation of the transmission output shaft 27 to the rotating tool 17. The transmission input shaft 42 is rotatably attached to the holder body 40 by a bearing 46. The linear protruding portion 42a that can be engaged with the recessed portion 27a of the transmission output shaft 27 is formed at that input end of the transmission input shaft 42 that faces the inside of the turret 2B.

In addition, the transmission input shaft 42 protruding outside the turret 2B has at its output end a tool insertion hole 47 into which the rotating tool 17 can be inserted, and a male screw 42b onto which a fixing and tightening means 48 consisting of a ring-like female thread member is screwed is formed on the outer circumference of the output end of the transmission input shaft 42. The opening side of the tool insertion hole 47 comprises a tapered surface 47a wherein the diameter of the hole increases toward the opening side. The fixing and tightening means 48 is a nut that is screwed onto the male screw 42b at the output end of the transmission input shaft 42 to tighten and fix the rotating tool 17 to the transmission input shaft 42 and that has in its inner circumferential part a cylindrical portion 49 with a wedge-like cross section that slidably contacts the tapered surface 47a of the tool insertion hole 47 of the transmission input shaft 42. By screwing the fixing and tightening means 48 onto the male screw 42b at the output end of the transmission input shaft 42, the wedge-like cylindrical portion 49 is pressed against the inner diameter side by the tapered surface 47a of the tool insertion hole 47 of the transmission input shaft 42, thereby causing the rotating tool 17 inserted into the tool insertion hole 47 to be tightened and fixed to the transmission input shaft 42. As shown in Figure 7, a plurality of engaging recessed portions 50 are formed on the outer circumference of the fixing and tightening means 48 to reliably engage with a dedicated tool used for a rotating operation when screwed onto the transmission input shaft 42.

The procedure for installing and removing the rotating tool 17 using a tool installation and removal mechanism of the above configuration is described below.

The turret 2B is rotated in such a way that the tool station of the turret 2B in which the tool holder 39 for the rotating tool 17 to be installed or removed is positioned next to the machining position or second next thereto. In this condition, the rotating tool 17 inserted into the wedge-like cylindrical portion 49 of the fixing and tightening means 48 is inserted into the tool insertion hole 47 of the transmission input shaft 42 of the tool holder 39. An dedicated tool is then used to screw the fixing and tightening means 48 onto the male screw 42b of the transmission input shaft 42. As this operation proceeds, the wedge-like cylindrical portion 49 of the fixing and tightening means 48 cuts in between the tapered surface 47a of the transmission input shaft 42 and the rotating tool 17, thereby forcing the wedge-like cylindrical portion 49 against the rotating tool 17 to tighten and fix the rotating tool 17 to the transmission input shaft 42. In this case, because the engaging protruding portion 42a at the input end of the transmission input shaft 42 engages the two guide plates 32, these guide plates 32 act as a rotation obstruction means to prevent the transmission input shaft 42 from being rotated by a rotational force effected when the fixing and tightening means 48 is screwed, thereby enabling the rotating tool 17 to be loaded easily into the turret 2B using only one hand. This is also true when the rotating tool 17 is removed from the turret 2B. During such an installation or removal, a rotational force from the protruding portion 42a of the transmission input shaft 42 is applied to the guide plates 32. Because, however, the circumferential part of the guide plate 32 that faces the front F of the machine is reinforced by the reinforcing members 33, the guide plates 32 are prevented from being twisted by the rotational force from the transmission input shaft 42, that is, the interval between both guide plates 32 is prevented from being increased, thereby allowing the rotating tool 17 to be reliably tightened.

Thus, because the tool can be installed and removed using only one hand, such operations can be performed very easily using the dominant hand of the operator. With conventional techniques where such operations are performed using both hands, weak and dominant, the operator is inconvenienced when engaging the dedicated tool using the weak hand with the recessed portion 50 shown in Figure 7, but this invention enables such an operation to be performed using only the dominant hand, thereby enabling unskilled workers to install and remove the tool easily even in a small space.

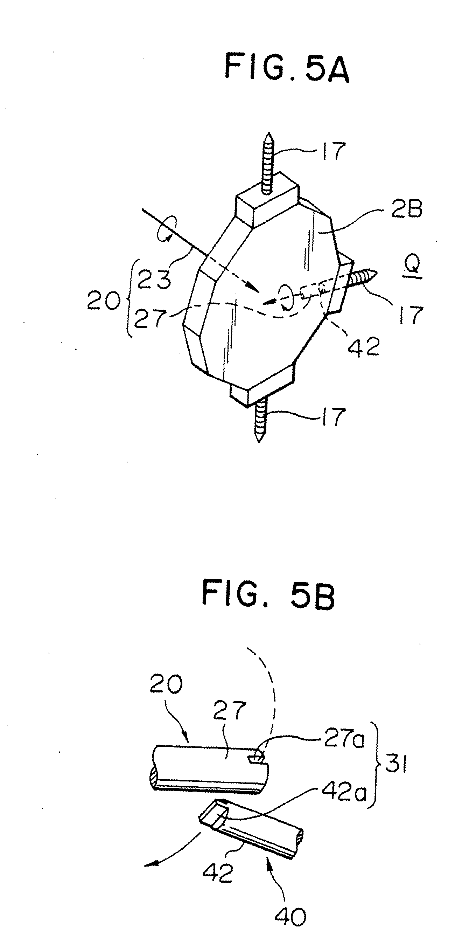

The rotational output of the tool-driving mechanism 20 is transmitted to the rotating tool 17 as follows; when the rotating tool 17 mounted in the turret 2B is indexed in a machining position Q (Figure 5) corresponding to the transmission output shaft 27 of the tool-driving mechanism 20, the transmission input shaft 42 of the tool holder 39 holding the rotating tool 17 engages with the transmission output shaft 27 at the protruding portion 42a and the recessed portion 27a. The motor that is a driving source for the tool-driving mechanism 20 can then provide rotational driving.

In this case, the recessed portion 27a and the protruding portion 42a are linearly formed, and the protruding portion 42a of the transmission input shaft 42 is engaged with the recessed portion 27a, which is standing by in a specified position, simply by means of rotating the turret 2B. To allow this engagement to be executed smoothly and reliably, the rotational phase is regulated by the stop-angle regulating device while the motor is stopped following the rotation of the rotating tool 17 so that the protruding portion 42a of the transmission input shaft 42 is parallel with a plane perpendicular to the axis of the turret, that is, so that the recessed portion 27a of the transmission output shaft 27 is parallel with the perpendicular plane.

On the other hand, when the turret 2B is rotated, the transmission input shaft 42 of the tool holder 39 is removed from the transmission output shaft 27 as shown in Figure 5B. Because, however, the protruding portion 42a is guided by the guide plates 32 while being sandwiched between them, the rotational angle provided during stoppage is maintained. Thus, the next time the protruding portion 42a of the transmission input shaft 42 of the tool holder 39 engages with the recessed portion 27a of the transmission output shaft 27, the directions of both portions are aligned and can be engaged with each other smoothly and reliably.

In this embodiment, the protruding portion 42a of the transmission input shaft 42 of the tool holder 39 and the recessed portion formed by the two guide plates 32 may be reversed. That is, a recessed portion may be formed in the transmission input shaft 42 so that a single guide plate 32 can engage this portion. In this case, the transmission output shaft 27 has, instead of the recessed portion 27a, a protruding portion that engages the recessed portion formed in the transmission input shaft 42.

In addition, the rotating-tool fixing structure may have the following configuration; a rotating-tool fixing structure to fix a rotating tool to a rotatable rotation transmission means installed in a tool holder comprises a fixing and tightening means to tighten and fix the rotating tool to the rotation transmission means and a rotation obstruction means to obstruct the rotation of the rotation transmission means, wherein the fixing and tightening means has a conversion mechanism to receive a force in the same direction as the rotating direction of the rotation transmission means and convert this force into one effected in the direction in which the rotating tool is tightened to the rotation transmission means. The conversion mechanism is composed of the tapered cylindrical portion 49, the tapered surface 47a of the tool insertion hole 47, and the screwing section of the male screw 42b between the fixing and tightening means 48 and transmission input shaft 42, according to the above embodiment.

## Claims

1. A rotating-tool fixing structure to fix a rotating tool (17) to a rotatable rotation transmission means (42) installed in a tool holder (39) of a pivotal turret (2B) in which a plurality of rotating tools (17) is received comprising a fixing and tightening means (48) to tighten and fix a rotating tool (17) to said rotation transmission means (42) using a force effected in the same direction as the rotating direction of rotation transmission means, and a rotation obstruction means to obstruct rotation of the rotation transmission means, wherein the rotation transmission means (42) has a protruding portion (42a) protruding toward the center of the turret (2B), and the rotation obstruction means is a guide member that engages with said protruding portion (42a) to guide the tool holder (39) in the pivoting direction of the turret (2B) while obstructing the rotation of the rotation transmission means (42),
**characterized** in that
the guide member is composed of two parallel disc-like guide plates (32) forming a notch (32a) receiving the protruding portion (42a) of the rotation transmission means (42), and that reinforcing members (33) that prevent said guide member from being twisted by a rotational force effected by the protruding portion (42a) during the installation or removal of the rotating tool (17) are installed between the guide plates (32) and in the circumferential part thereof and mounted by a fixing means (34) for keeping the distance between the guide plates (32) constant.

## Patentansprüche

1. Drehwerkzeug-Befestigungseinrichtung zur Befestigung eines Drehwerkzeugs (17) an einer drehbaren Rotations-Transmissionseinrichtung (42), die in einem Werkzeughalter (39) eines Revolvers (2B) installiert ist, in dem mehrere Drehwerkzeuge (17) aufgenommen sind, bestehend aus einer Befestigungs- und Spanneinrichtung (48), um ein Drehwerkzeug (17) an der Rotations-Transmissionseinrichtung (42) unter Anwendung einer Kraft zu spannen und zu befestigen, die in der gleichen Richtung wie die Drehrichtung der Rotations-Transmissionseinrichtung aufgebracht wird, und einer Drehsperreinrichtung, um die Drehung der Rotations-Transmissionseinrichtung zu sperren, wobei die Rotations-Transmissionseinrichtung (42) einen vorstehenden Abschnitt (42a) hat, der zur Mitte des Revolvers (2B) vorsteht, und die Drehsperreinrichtung ein Führungselement ist, das an dem vorstehenden Abschnitt (42a) angreift, um den Werkzeughalter (39) in der Drehrichtung des Revolvers (2B) zu führen, während die Drehung der Rotations-Transmissionseinrichtung (42) gesperrt wird,
**dadurch gekennzeichnet, daß**
das Führungselement aus zwei parallelen, scheibenförmigen Führungsplatten (32) besteht, die eine Nut (32a) bilden, die den vorstehenden Abschnitt (42a) der Rotations-Transmissionseinrichtung (42) aufnimmt, und daß Verstärkungselemente (33), die verhindern, daß das Führungselement durch eine Rotationskraft verdreht wird, die von dem vorstehenden Abschnitt (42a) während des Ein- oder Ausbaus des Drehwerkzeugs (17) ausgeübt wird, zwischen den Führungsplatten (32) und im Umfangsteil davon installiert und durch eine Fixiereinrichtung (34) befestigt sind, um den Abstand zwischen den Führungsplatten (32) konstant zu halten.

## Revendications

1. Structure de fixation d'outil rotatif pour fixer un outil rotatif (17) à un moyen rotatif de transmission de rotation (42) installé dans un porte-outil (39) d'une tourelle pivotante (2B) dans laquelle est reçue une pluralité d'outils rotatifs (17), comportant un moyen de fixation et de serrage (48) pour serrer et fixer un outil rotatif (17) sur ledit moyen de transmission de rotation (42) en utilisant une force exercée dans la même direction que la direction de rotation du moyen de transmission de rotation, et un moyen de blocage de rotation pour bloquer la rotation du moyen de transmission de rotation, le moyen de transmission de rotation (42) ayant une portion saillante (42a) faisant saillie vers le centre de la tourelle (2B), et le moyen de blocage de rotation étant un élément de guidage qui s'engage avec ladite portion saillante (42a) pour guider le porte-outil (39) dans la direction de pivotement de la tourelle (2B) tout en bloquant la rotation du moyen de transmission de rotation (42),
caractérisée en ce que l'élément de guidage se compose de deux plaques de guidage parallèles en forme de disque (32) formant une encoche (32a) recevant la portion saillante (42a) du moyen de transmission de rotation (42), et en ce que des éléments de renfort (33) qui empêchent ledit élément de guidage d'être tordu par une force de rotation exercée par la portion saillante (42a) pendant l'installation ou le retrait de l'outil rotatif (17) sont installés entre les plaques de guidage (32) et dans la partie circonférentielle de celles-ci et sont montés à l'aide d'un moyen de fixation (34) afin de maintenir constante la distance séparant les plaques de guidage (32).
